# EUROPEAN PATENT APPLICATION

(11) **EP 2 290 252 A1**
(43) Date of publication of application: **02.03.2011**
(21) Application number: 09770308.6
(22) Date of filing: 04.02.2009
(51) Int. Cl.: F16D 27/10

(54) **ELECTRONIC CLUTCH FOR A WATER PUMP**

(30) Priority: 27.06.2008 KR 20080061401
(71) Applicant: Gmb Korea Corp., Gyeongsangnam-do 641-315 (KR)
(72) Inventor: SUH, Jung Il, Gimhae-si Gyeongsangnam-do 621-831 (KR); WOO, Myung jin, Busan 614-100 (KR); KIM, Cho won, Masan-si Gyeongsangnam-do 630-761 (KR)
(74) Representative: Thacker, Darran Ainsley
(86) International application number: PCT/KR2009/000528
(87) International publication number: WO 2009/157635

(57) **Abstract**

The present invention relates to an electronic clutch for a water pump which is able to break the transmission of drive force between a pulley and a water pump drive shaft in accordance with the temperature of cooling water in an engine. A characterizing feature of the present invention is that it is arranged in such a way that, when the temperature of the cooling water is above a reference value, the water pump is engaged in operation by transmitting, to the drive shaft, the drive force of the pulley through contact between the two surfaces of a disk by means of a screw thread in the case of a main clutch and a clutch pulley by means of a spring, whereas, when the temperature of the cooling water is below the reference value, the operation of the water pump can be halted by supplying electricity to a coil, causing the main clutch to separate from the disk by means of the screw thread while the clutch pulley is in contact with the coil, and interrupting the transmission of the drive force of the pulley to the drive shaft.

## Description

### [Technical Field]

The present invention relates to an electronic clutch for a water pump which stops the operation of the water pump of a vehicle engine circulating cooling water until the temperature of the engine is raised to a designated value so as to shorten a warm-up time of the engine to prevent engine abrasion, increase of exhaust gas, or lowering of fuel efficiency due to the operation of the engine at a low temperature. Further, the present invention relates to an electronic clutch for a water pump which reduces the range of a temperature change of cooling water in a general commercial operating section to be narrower than that of a conventional temperature change of cooling water so as to allow a four-stroke cycle of an engine to be performed at a designated temperature to improve fuel efficiency and increase power transmission efficiency of the engine.

### [Background Art]

In general, a water pump is an apparatus which circulates cooling water, heated by a cylinder block or a head of an engine, to a radiator to prevent overheating of the engine. Particularly, in winter, during starting of the engine, circulation of lubricating oil is insufficient at a low temperature of the engine, an amount of exhaust gas increases due to incomplete combustion due to the low temperature, and thus a fuel consumption rate increases. Accordingly, the engine is rotated at idle for a designated time until the temperature of the engine is raised to some degree after starting of the engine, and then starts to be operated.

Therefore, before the temperature of the engine reaches a designated level after starting of the engine, cooling of the engine is unnecessary, and thus it is preferable that operation of the water pump is stopped if the temperature of the cooling water is low.

Korean Patent Laid-open Publication No. 1996-11154 (Publication Date of December 15, 1996), Korean Patent Laid-open Publication No. 2000-32589 (Publication Date of November 16, 1998), and Korean Patent Laid-open Publication No. 2002-33269 (Publication Date of May 6, 2002) respectively disclose selective operation of a conventional water pump in connection with the temperature of an engine, in which a water pump pulley and a water pump drive shaft are connected by an electronic clutch so as to allow cooling water to be circulated, if the temperature of the engine reaches a proper level.

### [Disclosure]

### [Technical Problem]

Therefore, the present invention has been made in view of the above problems, and it is an object of the present invention to provide an electronic clutch for a water pump which selectively interrupts operation of the water pump according to the temperature of an engine, provides safety in operation of the water pump, which is essential to continuously operate the engine, regardless of whether or not the electronic clutch is abnormal, and firmly interrupts the transmission of drive force between the water pump pulley and the drive shaft.

### [Technical Solution]

In accordance with an aspect of the present invention, the above and other objects can be accomplished by the provision of an electronic clutch for a water pump in which the water pump is operated through contact between a pulley and a drive shaft of the water pump when the electronic clutch is turned off, and the operation of the water pump is stopped through breaking of a connection between the pulley and the drive shaft of the water pump when the electronic clutch is turned on, thereby allowing the operation of the water pump not to be stopped, even if the electronic clutch or power supply to the electronic clutch is out of order.

Further, components of the clutch transmitting drive force of the water pump are locked with each other using load applied to screws and the pulley, thereby preventing generation of slippage on a contact surface of the clutch and thus improving reliability.

### [Advantageous Effects]

An electronic clutch for a water pump in accordance with the present invention does not separate a pulley and a drive shaft of the water pump if the electronic clutch is not operated and thus does not influence on the operation of the water pump so as to prevent overheating of an engine, even if the electronic clutch or a power supply system is out of order, and is operated at a low temperature state of the engine such that the water pump is operated only if the engine is raised to more than a designated temperature, thereby greatly shortening a warm-up time of the engine and thus preventing engine abrasion, or increase of exhaust gas or fuel consumption.

### [Description of Drawings]

The above and other objects, features and other advantages of the present invention will be more clearly understood from the following detailed description taken in conjunction with the accompanying drawings, in which:
FIG. 1 is an exploded longitudinal-sectional view of an electronic clutch for a water pump in accordance with the present invention;
FIG. 2 is a view illustrating an off state of the electronic clutch for the water pump in accordance with the present invention;
FIG. 3 is a view illustrating an on state of the electronic clutch for the water pump in accordance with the present invention; and
FIG. 4 is a perspective view of the electronic clutch for the water pump in accordance with the present invention in an assembled state.

### [Best Mode]

In accordance with the best mode of the present invention, in an electronic clutch for a water pump which is able to interrupt transmission of drive force between a pulley 1 and a drive shaft 2 according to the temperature of cooling water of an engine. When the temperature of the cooling water is above a reference value the water pump is operated by transmitting the drive force of the pulley 1 to the drive shaft 2 through contact of a clutch pulley 5 and a main clutch 6 with two surfaces of a disk 13 by means of screw threads 14 through a spring 17, and when the temperature of the cooling water is below the reference value transmission of the drive force of the pulley 1 to the drive shaft 2 is interrupted by supplying power to a coil 4, causing the main clutch 6 and the clutch pulley 5 to be separated from the disk 13 by means of the screw threads 14 while the clutch pulley 5 is in contact with the coil 4.

### [Mode for Invention]

In the present invention, in a state in which power is not supplied to a coil of an electronic clutch, a pulley and a drive shaft are rotated integrally and thus a water pump circulates cooling water, and when it is judged that the temperature of the cooling water or an engine reaches a proper temperature, for example, 80~85°C, power is applied to the coil of the electronic clutch and connection of the pulley and the drive shaft is released and thus the operation of the water pump is stopped.

Hereinafter, a preferred embodiment of the present invention will be described in detail with reference to the annexed drawings.

Prior to the following detailed description of the preferred embodiment of the present invention, a detailed description of known functions and configurations incorporated herein will be omitted or simplified when it may make the subject matter of the present invention rather unclear.

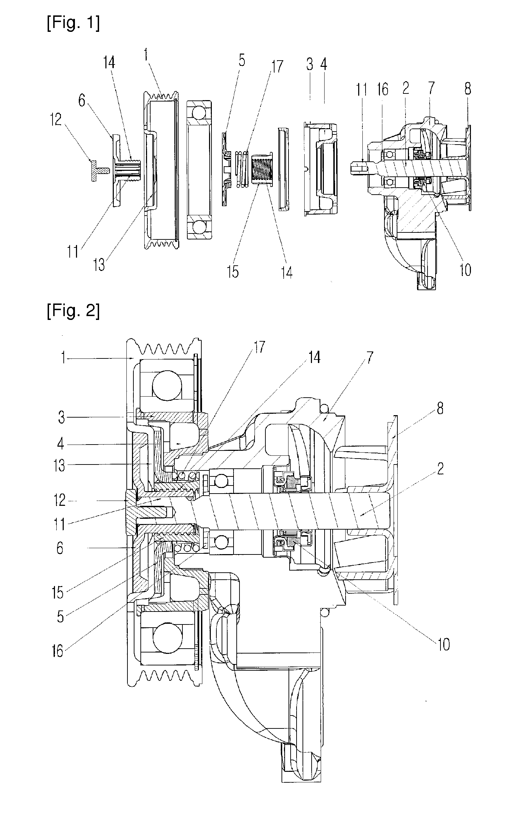

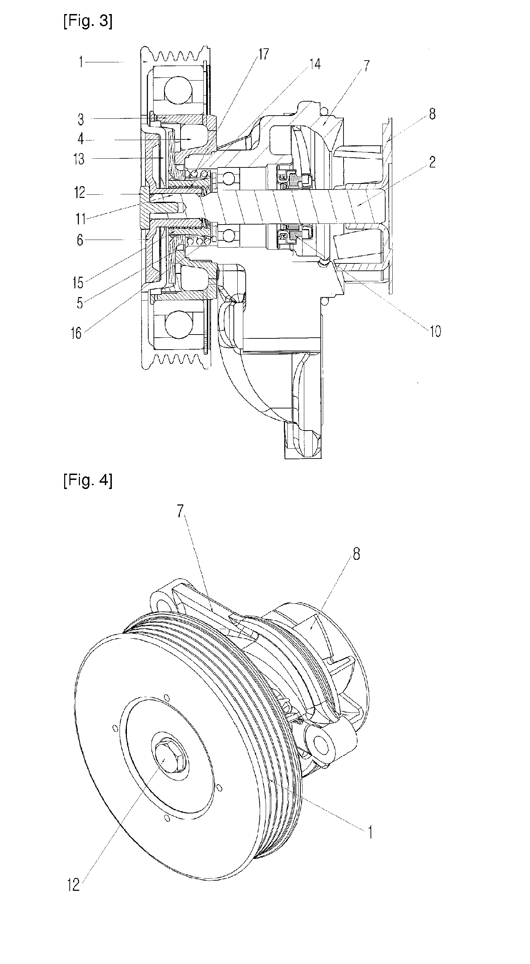

FIG. 1 is an exploded longitudinal-sectional view of an electronic clutch for a water pump in accordance with the present invention, FIG. 2 is a view illustrating an off state of the electronic clutch for the water pump in accordance with the present invention, FIG. 3 is a view illustrating an on state of the electronic clutch for the water pump in accordance with the present invention, and FIG. 4 is a perspective view of the electronic clutch for the water pump in accordance with the present invention in an assembled state.

As shown in FIGs. 1 to 4, a clutch unit to selectively interrupt transmission of drive force between a water pump pulley 1 and a drive shaft 2 is installed within the water pump pulley 1.

The clutch unit includes an electronic clutch including a yoke 3 and a coil 4, a clutch pulley 5 moving by means of magnetic force of the electronic clutch, and a main clutch 6 interlocked with the clutch pulley 5.

The disk-shaped coil 4 is installed in the yoke 3 constituting the clutch unit, and the yoke 3 is fixed to a body 7 of the water pump by interference fit and is connected with an external power source.

A drive shaft 2 connected with an impeller 8, and a mechanical seal 10 maintaining airtightness of the drive shaft 2, are installed in the body 7.

The main clutch 6 connected with the drive shaft 2 by a spline 11 is inserted into the drive shaft 2. A central nut 12 to prevent separation of the main clutch 6 and the pulley 1 is connected to the end of the drive shaft 2 thereby restricting a moving distance of the main clutch 6.

A disk part of the main clutch 6 protruded in the circumferential direction is configured so as to be contactable on, and separable from, the outer surface of a disk 13 formed integrally with the pulley 1. A screw thread 14 is formed on the outer circumferential surface of a cylindrical part of the main clutch 6 so that the cylindrical part is connected with a clutch lock 15 of the clutch pulley 5.

The clutch pulley 5 has a disk shape and is formed integrally with the cylindrical clutch lock 15 provided with a screw thread 14 formed in the inner diametrical direction. A spring 17 is inserted into a gap between a disk part of the clutch pulley 5 and a stopper 16 fixed to the drive shaft 2, and pressurizes the disk part of the clutch pulley 5 toward the disk 13 formed integrally with the pulley 1 so as to allow the disk part of the clutch pulley 5 to be in contact with the disk 13.

Further, the disk part of the clutch pulley 5 reacts with electromagnetic force of the coil 4 installed in the yoke 3, contacts and is fixed to the coil 4 when power is applied to the coil 4, and is separated from the coil 4 by elastic force of the spring 17 and contacts the disk 13 when electromagnetic force is removed from the coil 4.

Hereinafter, an operation of the electronic clutch in accordance with the present invention will be described.

FIG. 2 is a view illustrating a power-off state of the coil 4 of the electronic clutch, when it is judged that the temperature of cooling water of the engine is above a designated level by a cooling water temperature sensor (not shown) and a control device (not shown).

In the power-off state of the coil 4, the pulley 1 and the drive shaft 2 are integrated and the water pump is operated, the clutch pulley 5 moves forwards toward the disk 13 by the pressure of the spring 17, connection parts of the screw thread 14 formed on the inner diametrical part of the clutch lock 15 integrated with the clutch pulley 5 and the screw thread 14 formed on the outer circumferential surface of the cylindrical part of the main clutch 6 are relatively rotated, and the disk part of the clutch pulley 5 moves forwards at the inner part of the disk 13 and the disk part of the main clutch 6 moves backwards toward the disk 13 at the outer part of the disk 13, thereby strongly pressurizing the disk part of the clutch pulley 5 and the disk part of the main clutch 6 onto the front and rear surfaces of the disk 13. Thus, the clutch pulley 5 and the main clutch 6 are rotated together with the rotation of the disk 13 of the pulley, and rotating force of the pulley 1 is transmitted to the drive shaft 2 connected with the spline 11 formed on the inner diameter of the cylindrical part of the main clutch 6, thereby rotating the impeller 8 so as to circulate cooling water.

Therefore, in accordance with the present invention, even if the electronic clutch is out of order or power supply is out of order, the operation of the water pump is not influenced.

FIG. 3 is a view illustrating a power-on state of the coil 4 of the electronic clutch, when it is judged that the temperature of cooling water of the engine is a low temperature above a reference by the cooling water temperature sensor and the control device.

When power is supplied to the coil 4, the disk part of the clutch pulley 5 contacts the coil 4 and is separated from the disk 13, and when the clutch pulley 5 moves while being rotated by the screw thread 14, the cylindrical part of the main clutch 6 connected with the clutch pulley 5 by the screw threads 14 moves in the opposite direction to the moving direction of the clutch pulley 5 and is separated from the disk 13, thereby interrupting transmission of drive force between the pulley 1 and the drive shaft 2. Accordingly, the water pump is not operated.

### [Industrial Applicability]

An electronic clutch for a water pump in accordance with the present invention is used to shorten a warm-up time of an engine of a vehicle, and to uniformly maintain the temperature of cooling water so as to contribute to improvement of fuel efficiency of the vehicle.

Although the preferred embodiment of the present invention has been disclosed for illustrative purposes, those skilled in the art will appreciate that various modifications, additions and substitutions are possible, without departing from the scope and spirit of the invention as disclosed in the accompanying claims.

## Claims

1. An electronic clutch for a water pump being able to interrupt transmission of drive force between a pulley and a drive shaft according to the temperature of cooling water of an engine, wherein:
when the temperature of the cooling water is above a reference value, the water pump is operated by transmitting the drive force of the pulley to the drive shaft through contact of a clutch pulley and a main clutch with two surfaces of a disk by means of screws through a spring; and
when the temperature of the cooling water is below the reference value, transmission of the drive force of the pulley to the drive shaft is interrupted by supplying power to a coil, causing the main clutch and the clutch pulley to be separated from the disk by means of the screws while the clutch pulley is in contact with the coil.
